# EUROPEAN PATENT SPECIFICATION

(11) **EP 3 391 013 B1**
(45) Date of publication and mention of the grant of the patent: **08.07.2020**
(21) Application number: 16831736.0
(22) Date of filing: 14.12.2016
(51) Int. Cl.: G01M 17/02, G01N 21/954

(54) **APPARATUS AND METHOD FOR THE ANALYSIS OF TYRES**
VORRICHTUNG UND VERFAHREN ZUR ANALYSE VON REIFEN
APPAREIL ET PROCÉDÉ POUR L'ANALYSE DE PNEUS

(30) Priority: 16.12.2015 IT UB20159520
(43) Date of publication of application: 24.10.2018
(73) Proprietor: Pirelli Tyre S.p.A., 20126 Milano (IT)
(72) Inventor: HELD, Alessandro, 20126 Milano (IT); BOFFA, Vincenzo, 20126 Milano (IT); REGOLI, Fabio, 20126 Milano (IT); BALLARDINI, Valeriano, 40026 Imola (IT)
(74) Representative: Tirloni, Bartolomeo
(86) International application number: PCT/IB2016/057613
(87) International publication number: WO 2017/103809

(56) References cited:
- US-A1- 2005 264 796
- US-A1- 2011 221 887

## Description

The present invention relates to an apparatus for the analysis of tyres in a tyre production line, in particular by the acquisition of images of the surface of a tyre and further processing thereof, for example for checking the possible presence of detectable defects on the surface of a tyre.

"Tyre" typically means the finished tyre, i.e. after the building, moulding and vulcanisation steps, but possibly also the green tyre after the building step and before the moulding and/or vulcanisation steps.

Typically, a tyre has a substantially toroidal structure around an axis of rotation of the same during operation, and has an axial middle line plane orthogonal to the axis of rotation, said plane typically being a geometrical (substantial) symmetry plane (for example, ignoring any minor asymmetries, such as tread pattern and/or the inner structure).

Outer or inner surface of the tyre denote the surface which remains visible after the coupling of the tyre with the mounting rim thereof and the one no longer visible after said coupling, respectively.

The terms "low", "high", "below" and "above" identify the relative position of an element, such as a component of a tyre, a tyre, an apparatus, a device, etc., with respect to the ground during use or of one of said elements with respect to another element.

By 'substantially orthogonal' with respect to geometric elements (such as straight lines, planes, surfaces, etc.) it is meant that these elements form an angle of 90°+/-15°, preferably 90°+/-10°.

By 'substantially parallel' with respect to said geometric elements it is meant that these elements form an angle of 0°+/-15°, preferably 0°+/-10°.

The terms 'optical', 'light' and the like refer to an electromagnetic radiation used that has at least a portion of the spectrum falling in a widened neighbourhood of the optical band, and not necessarily strictly falling within the optical band (i.e. 400 -700 nm), for example this widened neighbourhood of the optical band may range from ultraviolet to infrared (for example, a wavelength of between about 100 nm and about 1 µm).

By "digital image", or equivalently "image", it is generally meant a set of data, typically contained in a computer file, in which each tuple of coordinates (typically each pair of coordinates) of a finite set (typically two-dimensional and matrix, i.e. N rows x M columns) of tuples of spatial coordinates (each tuple corresponding to a pixel) is associated with a corresponding set of numerical values (which may be representative of different magnitudes). For example, in monochrome images (such as those in grey levels or 'greyscale'), such a set of values consists of a single value in a finite scale (typically 256 levels or tones), this value for example being representative of the luminosity (or intensity) level of the respective tuple of spatial coordinates when displayed. A further example is represented by colour images, in which the set of values represents the luminosity level of a plurality of colours or channels, typically the primary colours (for example red, green and blue in RGB coding and cyan, magenta, yellow and black in CMYK coding). The term 'image' does not necessarily imply the actual display of the same.

Any reference to a specific "digital image" (for example, the digital image initially acquired on the tyre) includes more generally any digital image obtainable through one or more digital processing of said specific digital image (such as, for example, filtering, equalization, smoothing, binarisation, thresholding, morphological transformations (opening, etc.), derivative or integral calculations, etc.).

The term "two-dimensional image" or "2D" means a digital image each pixel of which is associated to information representative of the reflectivity/diffusivity and/or colour of the surface, such as the images detected from the common cameras or digital cameras (e.g. CCD).

The term "three-dimensional image" or "3D" denotes a digital image each pixel of which is associated to a surface height information.

"Digital camera" or in short "camera" denotes an optoelectronic device adapted to acquire a two-dimensional digital image and including a digital image sensor (or in short 'sensor'), which defines an image plane, and an objective (which is assumed to be with cylindrical symmetry, although the invention is not limited only to these objectives).

'Sensor' means a set of photosensitive elements (called 'pixels') capable of transforming the incident light into an electric signal, for example by CCD or CMOS technology. The term pixel is used to denote both the single photosensitive element of the sensor, and the single element forming the digital image as defined above, each pixel of the sensor typically corresponding to a pixel of the image.

"Matrix camera" means a camera whose sensor has the pixels arranged according to a rectangular matrix having the two dimensions of comparable length (for example, the two dimensions differ by less than one order of magnitude, as in the 4x3 or 3x2 formats). Typically, the diagonal of the sensor matrix is long some tens of millimetres. By extension a "matrix" image is a digital image acquired by a matrix camera.

"Optical axis" of an objective denotes the line along which a rotation symmetry of the objective exists.

"Focal plane" of a camera means is the plane of object points that are focused by the objective on the sensor, i.e. the rays originating from each object point of the focal plane converge in a respective point on the sensor plane (image plane).

'Depth of field' means the set of planes in a neighbourhood of the focal plane each point of which, when projected by the objective on the sensor plane, forms an image inscribed in a predetermined circle of confusion (for example having a diameter of 5-10 microns).

"Laser source having a linear beam" or in short, "linear laser source" means a laser source adapted to emit a beam having a cross section in the form of line, typically a straight segment.

"Propagation plane" of a linear laser source means the plane on which the linear beam propagates (said line lying on the propagation plane). "Propagation axis" means the axis, belonging to the propagation plane and passing through the laser source, which defines the direction of propagation of the laser beam.

"Surface linear portion" means a surface portion having a much dimension size than the other dimension orthogonal thereto, typically greater by at least two orders of magnitude. The minor dimension of the linear surface portion is typically less than or equal to 0.1 mm.

In the context of the production and building processes of tyres for vehicle wheels, the need has been felt to perform quality inspections on manufactured products, with the aim to prevent defective tyres or tyres not meeting the design specifications from being put on the market, and/or to progressively adjust the apparatuses and machinery used so as to improve and optimise the execution of the operations carried out in the production process.

These quality inspections include for example those performed by human operators who dedicate a fixed time to a visual and tactile inspection of the tyre; if, in the light of his own experience and sensitivity, the operator were to suspect that the tyre does not meet certain quality standards, the same tyre is subjected to further inspections, through a more detailed human inspection and/or suitable equipment in order to deepen the evaluation of any structural and/or qualitative deficiencies.

WO 2015/044196 A1 describes a device for the acquisition of three-dimensional images of the inner surface of a tyre comprising laser illumination means, image acquisition means and a reflector optically interposed between the illumination means and the illuminated area of the tyre surface. The laser illumination means are capable of projecting a luminous line on the surface of the tyre and the acquisition means comprise a matrix camera oriented according to a triangulation angle formed between the optical axis of the laser and the optical axis of the camera.

US 2011/221887 A1 discloses an imaging system for inspecting an inner surface bounding a component bore.

In the field of tyre quality control, the Applicant has set itself the problem of analysing the inner and/or outer surface of the tyre by the optical acquisition of digital images thereof and subsequent processing thereof, for example in order to detect the possible presence of defects on, or in the vicinity of, the surface. The defects sought may for example be irregularities on the surface of a tyre (unvulcanised compound, alterations in shape, etc.) structural unevenness, cuts, presence of foreign bodies on the surface, etc.

The Applicant has observed that for the inspection to be used "in line" within a plant for the production of tyres, the inspections itself should be performed in a reduced time, less than or corresponding to said cycle time, and with reduced costs and/or overall dimensions.

Within this context, the Applicant deems it advantageous to acquire and analyse three-dimensional images of the tyre surface.

For example, the 3D technology (in particular the high-definition, i.e. with less than or equal to 10 micron resolution) can be used to detect lacks or projections of material on the surface of the tyres, typically lack or bubbles, or also some features such as raised wording and knurling.

The Applicant has realised that the quality control methods of the tyres with optical acquisition of 3D images of the type described in WO 2015/044196 A1 can be cumbersome in terms of consumption of time and/or space, thus substantially lending themselves to an execution thereof off the production line or, if in line, causing a lengthening of the cycle times and/or (direct and/or indirect) production costs.

The Applicant has then noted that the acute angle formed between the propagation axis of the laser beam and the optical axis of the matrix camera (also known as 'triangulation angle') is usually large, for example between 30° and 45°, to amplify enough, on the two-dimensional image acquired by the matrix camera, the spatial excursion of the reflected laser line upon the variation of the height of the reflection point on the surface, such excursion being proportional to the sine of the angle.

The Applicant has realised that, in the present context, where the maximum excursion of the height of the tyre surface (i.e. the maximum difference in height between depression areas and relief zones) that is to be detected is of a few millimetres, and where the processing of the acquired matrix image (for example the determination of the central points of the laser line and/or triangulation calculations to derive the height) is performed on board of the camera, such range of values of said typical angle produces on the detected image a corresponding spatial excursion of the reflected laser line (in the direction orthogonal to the laser line on the surface) which requires the acquisition and subsequent processing of two-dimensional images having a width (along the excursion direction) such as to slow the acquisition rate of the camera itself. In other words, the maximum frequency with which the camera is able to capture and process two-dimensional images is limited by the size of the acquired two-dimensional images, as determined by the above range of typical values for the angle of incidence for a predetermined maximum excursion in height.

The Applicant has also realised that such a value of the triangulation angle makes the acquisition apparatus relatively bulky and/or heavy, which is perceived of particular relevance in the present context, where the image acquisition apparatus must be quickly moved within narrow spaces (such as in the inner space of the tyre) and/or in spaced crowded by other devices or members.

Within the acquisition of digital images of a tyre surface for the analysis thereof in a production line, where the acquired digital images are three-dimensional (3D) using laser triangulation technique, the Applicant has understood that it is very important to get said three-dimensional images within a limited time and/or at low costs.

The Applicant has perceived that the solution to the problem mentioned above may be implemented with a different management of the triangulation angle.

Finally, the Applicant has found that by reducing the triangulation angle, a reduction of the spatial excursion of the laser line reflected on the acquired 2D matrix images is obtained, which in turn causes a reduction in the size of such 2D images to reproduce such an excursion. In this way, the camera can process "lighter" images at a higher frequency. The reduction of the triangulation angle also reduces the overall dimensions of the apparatus, which must be moved quickly around and within the tyre, and possibly simultaneously with other apparatus moving in the space around the tyre itself.

According to a first aspect thereof, the invention relates to an apparatus for analysing tyres according to claim 1.

The Applicant believes that 3D images can be acquired with the above solution, reducing the time spent and therefore the use of the apparatus itself, while containing the dimensions required by the apparatus and/or by the respective analysis station, both in operation and in the idle time. According to a further aspect thereof, the invention relates to a method for analysing tyres according to claim 9.

According to a third aspect thereof, the invention relates to a station for analysing tyres in a tyre production line according to claim 8.

The Applicant believes that since the acute angle (i.e. the triangulation angle) formed between the optical axis and the propagation axis is between 5° and 25°, the acquisition of 3D images of large surface regions is enabled with relatively reduced times, while keeping the apparatus compact and of small overall dimensions as a whole (and thus easily moved in space, even in confined spaces).

In fact, the two-dimensional images acquired and processed by the matrix camera are contained (in terms of pixels) in their dimension orthogonal to the reflected laser line, for a given maximum excursion of the height to detect, and therefore faster to process. Just to provide a numerical example, for a triangulation angle equal to 15° the present invention allows processing matrix images of just 2048x60 pixels to detect a maximum excursion of the surface height of about 25 mm with a resolution of 1 pixel per 0.1 mm.

It is noted that the reflected laser line may be discontinuous in the matrix image, for example, surfaces that have bumps. 'Dimension orthogonal to the reflected laser line' therefore denotes the dimension orthogonal to the direction along which the reflected laser line develops in case of a flat and smooth surface.

The present invention, in one or more of the above aspects thereof, may further have one or more of the preferred features described hereinafter. Preferably, said acute angle formed between the optical axis and the propagation axis is less than or equal to 20°.

Preferably, said acute angle is greater than or equal to 10°. Advantageously, in this way, the 'crushing' of the spatial excursion of the reflected laser line in the two-dimensional image is further accentuated and the number of pixels required along the direction orthogonal to the reflected laser line is further reduced accordingly.

Preferably, the acquisition system is rigidly mounted on said support frame. Typically, the camera comprises a sensor, defining an image plane, an objective having said optical axis, a focal plane and a depth of field. Preferably, said image plane forms with a reference plane orthogonal to the optical axis and passing through said objective, an acute angle having vertex on a side where said laser source is arranged, in a manner such that said focal plane forms with said propagation axis an acute angle of less than 45° (that is, the image plane is not orthogonal to the optical axis as it normally occurs).

Preferably, said acute angle between focal plane and propagation axis is less than or equal to 30°, even more preferably it is less than or equal to 10°. In this way, advantageously, the focal plane is tilted toward the propagation plane of the laser beam and the depth of field develops around the propagation plane, which is the object plane (i.e. the plane of the points of which the image is to be acquired, or in other words, the plane on which the laser line reflected by the tyre surface at various heights lies), thereby allowing a better focus of the reflected laser line, the aperture being equal. It is noted that reducing the aperture results in an increase in the depth of field, but this would lead to an increase in the laser illumination power, with complexity/cost and/or laser safety drawbacks.

Preferably, said acute angle between image plane and reference plane is less than or equal to 20°.

Preferably, said acute angle between image plane and reference plane is less than or equal to 15°.

Preferably, said acute angle between image plane and reference plane is greater than or equal to 5°. In this way, advantageously, the apparatus remains very compact since the body of the camera (which develops along the normal to the image plane) is almost aligned with the laser and the propagation plane thereof, resulting in smaller lateral dimensions.

Preferably, said camera is adapted to acquire a two-dimensional image of a portion of said surface and comprises a processing unit configured for identifying in said two-dimensional image a reflected laser line representing said linear beam reflected by said surface.

Preferably, the processing unit is configured for processing, via triangulation, said reflected laser line in order to obtain a three-dimensional image containing information relative to an altimetric profile of part of said surface portion.

Preferably, the camera comprises a rectangular sensor having a greater size substantially parallel to said propagation plane, wherein said greater size is smaller than the size orthogonal thereto by at least one order of magnitude. In this way, the sensor is structurally optimised to detect the two-dimensional images with the dimensions tailored to the surface portion of which it is necessary to acquire the two-dimensional image for the laser triangulation.

Preferably, the processing unit is configured for selecting a sub-portion of the acquired two-dimensional image, along a direction substantially orthogonal to the reflected laser line in the two-dimensional image itself. In this way, without the need for a sensor of dedicated size, smaller images can be processed.

Preferably, after said operation of selection of the sub-portion of the acquired image, the number of pixels along said direction substantially orthogonal to the reflected laser line is less than or equal to 200 pixels. Preferably, said number of pixels is less than or equal to 100 pixels. In this way, advantageously, a high 3D image acquisition rate is obtained. Preferably, said optical axis and said propagation axis lie in a plane substantially orthogonal to said propagation plane. In this way, the overall dimensions are optimised and/or the image quality is improved.

Preferably, said surface portion is situated within said depth of field.

Preferably, said surface portion lies in a lying plane substantially orthogonal to said propagation plane (and the optical axis is tilted with respect to the normal to the surface portion). In this situation, advantageously, the depth of field to focus the maximum desired height excursion of the surface portion is less than the configuration in which the surface portion is substantially perpendicular to the optical axis.

Preferably, it is contemplated that a region of said surface of the tyre is translated with respect to the apparatus, in a manner such that a series of distinct linear portions of said surface region is situated in succession within said depth of field of said camera at least at said propagation plane, and wherein said acquisition system is activated during said translation for acquiring a respective series of three-dimensional images of said series of distinct linear portions of said surface region, and wherein a complete three-dimensional image of the surface region is obtained by combining the series of three-dimensional images obtained on the series of linear surface portions.

Preferably, said surface region is a circumferential surface region.

More preferably, said circumferential surface region has a width along an axis of said tyre of from about 5 mm to about 20 mm.

Preferably, it is contemplated to select a sub-portion of the acquired two-dimensional image, along a direction substantially orthogonal to the reflected laser line in the two-dimensional image itself.

Preferably, it is contemplated to rotate said tyre around a rotation axis, repeating in sequence said operations of irradiating with a laser beam, acquiring a two-dimensional image, identifying said reflected laser line, processing said reflected laser line and obtaining a three-dimensional image, with reference to a series of linear portions of a circumferential surface region of said tyre, and obtaining a complete three-dimensional image of the surface region by combining the series of three-dimensional images obtained in succession on the series of linear surface portions.

Preferably, said movement member of the apparatus is a robot arm.

Preferably, said movement member of the apparatus is an anthropomorphic robot arm.

Preferably, said movement member of the apparatus is an anthropomorphic robot arm with at least five axes.

Further features and advantages will become more apparent from the detailed description of some exemplary but non-limiting embodiments of an apparatus, a method and a station for analysing tyres in a tyre production line, according to the present invention. Such description will be given hereinafter with reference to the accompanying figures, provided only for illustrative and, therefore, non-limiting purposes, in which:
- figure 1 shows a partial and schematic perspective view of an apparatus for analysing tyres according to the present invention;

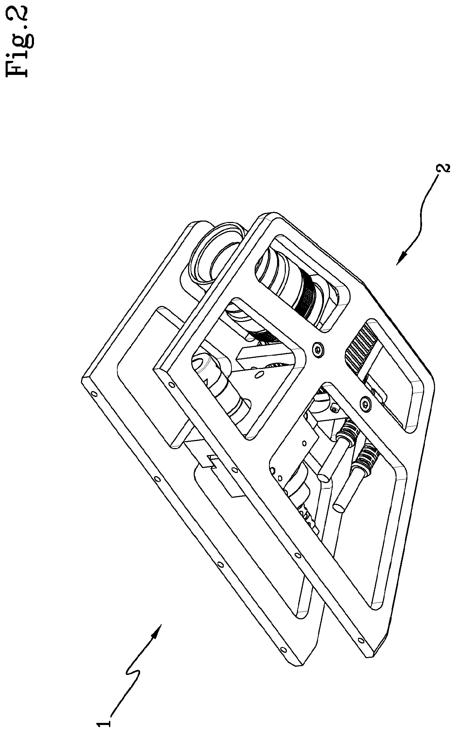

- figure 2 shows a further perspective view of the apparatus in figure 1 from a different view;

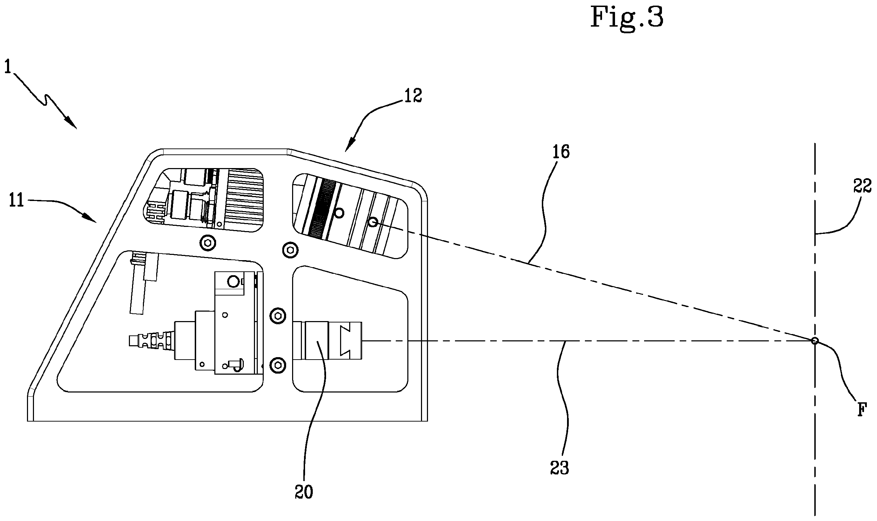

- figure 3 shows a top view of the apparatus in figure 1;
- figures 4A and 4B schematically show two possible optical configurations of the acquisition system according to the present invention, respectively;
- figure 5 shows a station for analysing tyres according to the present invention.

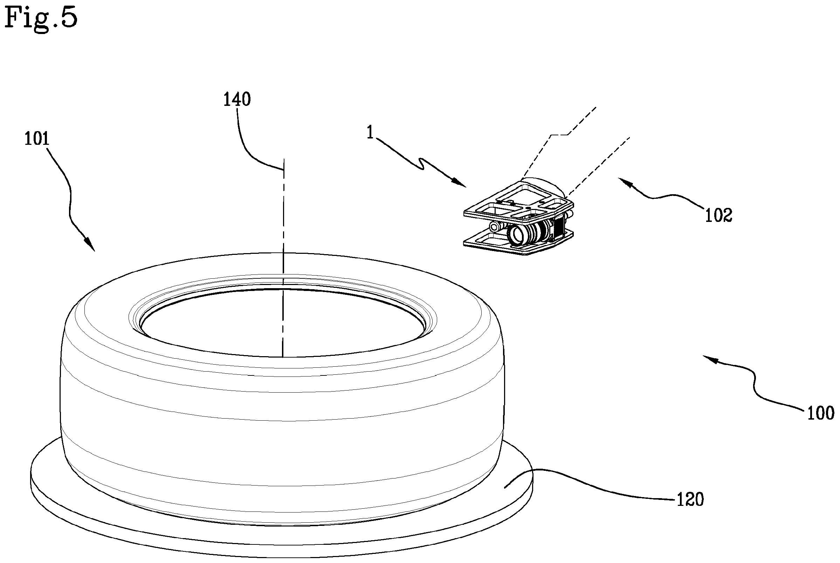

With reference to figure 5, reference numeral 100 indicates a station for analysing tyres in a tyre production line.

Preferably, the station comprises a support 120 (for example a fifth wheel) adapted to support tyre 101 set on a sidewall and to rotate the tyre around a rotation axis 140 thereof (preferably arranged vertically).

Station 100 comprises an apparatus 1 for analysing tyres.

Preferably, the station comprises a movement member 102 (only shown schematically) on which apparatus 1 is mounted for the movement thereof in space. Preferably, the movement member of the apparatus is a robot arm. Preferably, said movement member is an anthropomorphic robot arm. Preferably, said movement member is an anthropomorphic robot arm with at least five axes. It is noted that advantageously, apparatus 1 is inserted within the tyre from the top and not from the bottom through support 120. Apparatus 1 comprises a support frame 2 intended to be mounted on the movement member of the apparatus.

Preferably, the apparatus comprises an acquisition system 11 of two-dimensional images of the surface mounted, preferably rigidly, on the support frame.

The acquisition system 11 comprises a matrix camera 12 and a laser source 20. Typically, the camera comprises a camera body 14 housing a rectangular matrix sensor (not shown, such as 2048 x 1088) defining an image plane 29 and a processing unit (not shown) configured for identifying, in the acquired two-dimensional images, a reflected laser line that represents the linear beam reflected by the surface, and for processing, via triangulation, the reflected laser line in order to obtain a three-dimensional image containing information relative to an altimetric profile of a surface portion.

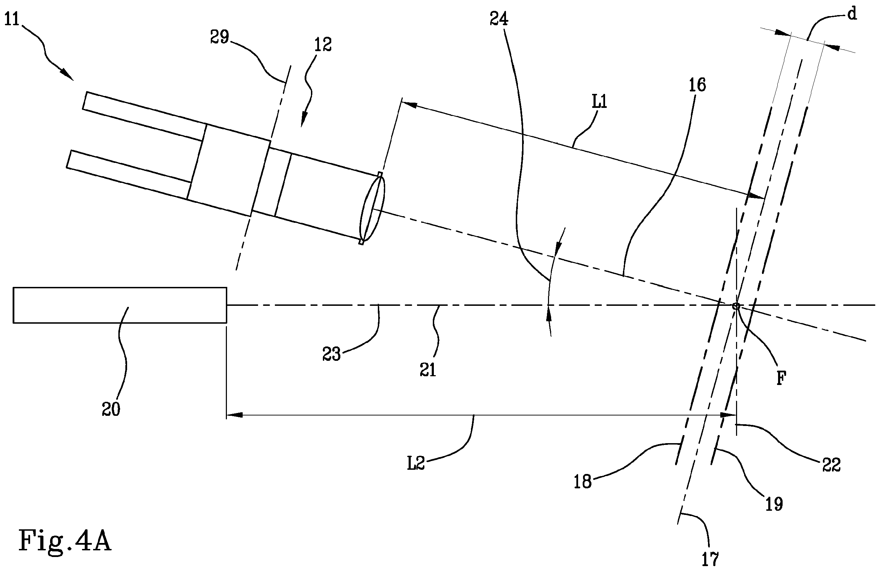

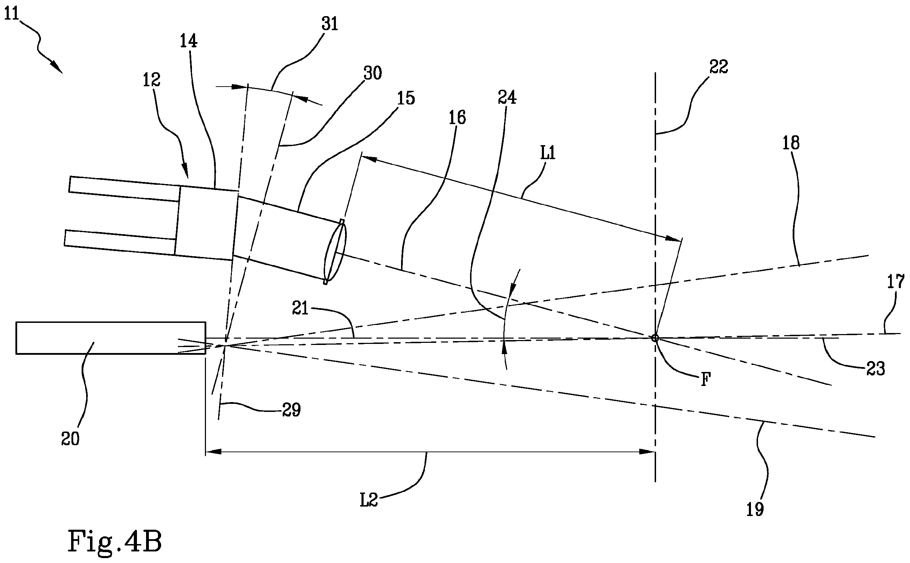

Preferably, the camera has an objective 15 and is characterised by an optical axis 16, a focal plane 17 and a depth of field (figure 4A and 4B show the end planes 18, 19 of the depth of field).

Preferably, the laser source 20 is adapted to emit a linear beam having a propagation plane 21 and a propagation axis 23.

Figures 4A and 4B schematically show a top view of the acquisition system 11 in two respective embodiments of the present invention.

In both figures, the optical axis 16 forms an acute angle 24 with the propagation axis 23 exemplarily equal to 15°.

Moreover, the optical axis and the propagation axis lie in a plane orthogonal to the propagation plane (the lying plane in figures 4A and 4B).

The focal point F indicates the intersection point between the optical axis 16 and the focal plane 17.

Exemplarily, distance L1 along the second optical axis between an outer optical surface of the matrix camera and the focal point F is equal to 210 mm and distance L2 along the propagation axis between an outer optical surface of the laser source and the focal point F is equal to 285 mm.

It is assumed that the tyre surface (more precisely, a plane thereof at a given height), during the analysis, lies substantially on the lying plane 22. Preferably, the lying plane 22 is orthogonal to the propagation axis 23. "Lying plane" of a surface portion is any plane passing by a given height of the surface portion of the tyre, preferably the plane passing by the intermediate height of the maximum excursion of the surface height.

In figure 4A, the optical axis of the objective is, as typically happens, orthogonal to the image plane 29 of the sensor. In this situation, the focal plane 17 is also orthogonal to the optical axis, as are extremes 18 and 19 of the depth of field. Assuming that the maximum altimetric excursion to be detected on the tyre surface is equal to h (for example of the order of a few tens of mm), it follows that the length d of the depth of field should be such as to at least include such an excursion h on the propagation plane. In the configuration in figure 4A, where the propagation plane 21 (of which the trace is visible in said figure 4A) is orthogonal to the lying plane of the optical axis 22 and where the optical axis is tilted with respect to the normal to plane 22, the focal plane 17 is tilted with respect to the lying plane 22. In this situation, the length d of the depth of field along the optical axis must be greater than or equal to dₘᵢₙ=h*cosα, where α is the width of the acute angle 24. Therefore, such a minimum length dₘᵢₙ is less than a comparative configuration in which the focal plane lies parallel to surface 22, where dₘᵢₙ=h.

Preferably, as shown in figure 4B, the image plane 29 of the camera sensor forms, with a reference plane 30 (shown only schematically) orthogonal to the optical axis and passing by objective 15, an acute angle 31 with vertex on the side where the laser source is, and exemplarily equal to 10°. In this way, the focal plane 17 forms a very small acute angle with the propagation plane 21, and the depth of field, in the region of interest around the lying plane 22 of the surface, develops around the propagation plane 21, allowing easy focusing of the reflected laser line along excursion h, even with open aperture.

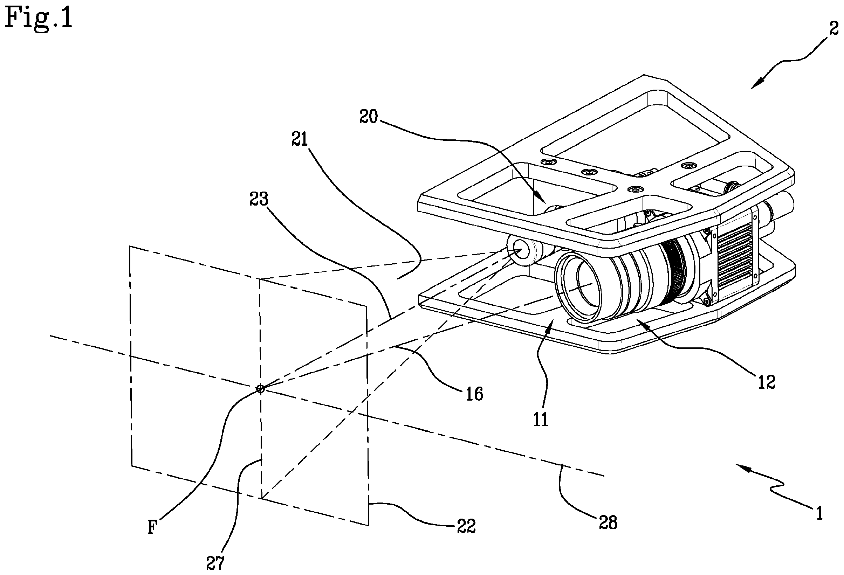

In use, a surface region of the tyre is translated with respect to the apparatus, for example along direction 28 orthogonal to the propagation plane 21, so that a number of distinct (linear) portions of the surface region is located in succession within the depth of field at the propagation plane 21 (for example, at line 27 shown in figure 1). The acquisition system is activated during this translation to acquire a respective series of three-dimensional images of the set of linear portions of the surface region, and a complete three-dimensional image of the surface region is obtained by combining the series of three-dimensional images obtained on the series of linear surface portions.

## Claims

1. Apparatus (1) for the analysis of tyres comprising:
- a support frame (2) and
- an acquisition system (11) for acquiring three-dimensional images of a surface of a tyre, said acquisition system being mounted on said support frame and comprising:
- a matrix camera (12), having an optical axis (16), and
- a laser source (20) adapted to emit a linear beam having a propagation plane (21) and a propagation axis (23),
**characterized in that** an acute angle (24) formed between said optical axis (16) and said propagation axis (23) is greater than or equal to 5° and less than or equal to 25°.

2. Apparatus as claimed in claim 1, wherein said acute angle (24) is greater than or equal to 10° and less than or equal to 20°.

3. Apparatus as claimed in claim 1 or 2, wherein the camera comprises a sensor, defining an image plane (29), an objective (15) having said optical axis, a focal plane (17) and a depth of field, and wherein said image plane (29) forms, with a reference plane (30) orthogonal to the optical axis (16) and passing through said objective, an acute angle (31) having vertex on a side where said laser source is arranged, in a manner such that said focal plane (17) forms with said propagation axis (23) an acute angle of less than 45°, wherein said acute angle (31) between the image plane (29) and the reference plane (30) is less than or equal to 20°, and/or greater than or equal to 5°.

4. Apparatus as claimed in any one of the preceding claims, wherein the camera (12) is adapted to acquire a two-dimensional image of a portion of said surface and comprises a processing unit configured for identifying, in said two-dimensional image, a reflected laser line that represents said linear beam reflected by said surface, and for processing, via triangulation, said reflected laser line in order to obtain a three-dimensional image containing information relative to an altimetric profile of part of said surface portion.

5. Apparatus as claimed in claim 4, wherein the camera (12) comprises a rectangular sensor having a greater size substantially parallel to said propagation plane (21), wherein said greater size is smaller than the size orthogonal thereto by at least one order of magnitude.

6. Apparatus as claimed in claim 4, wherein the processing unit is configured for selecting a sub-portion of the acquired two-dimensional image, along a direction substantially orthogonal to the reflected laser line in the two-dimensional image itself, and wherein, after said operation of selection of the sub-portion of the acquired image, the number of pixels along said direction substantially orthogonal to the reflected laser line is less than or equal to 200 pixels.

7. Apparatus as claimed in any one of the preceding claims, wherein said optical axis (16) and said propagation axis (23) lie in a plane substantially orthogonal to said propagation plane (21).

8. Station (100) for analysing tyres in a tyre production line, the station comprising a support (120) adapted to support the tyre (101) set on a sidewall and to rotate the tyre around a rotation axis (140) thereof, and the apparatus as claimed in any one of the preceding claims, the apparatus being intended to be mounted on a movement member (102) thereof.

9. Method for analysing tyres comprising:
- arranging a tyre (101) to be analysed;
- irradiating a linear portion of a surface of said tyre with a linear laser beam having a propagation plane (21) and a propagation axis (23) incident on said linear surface portion;
- acquiring a two-dimensional and matrix image of a surface portion containing said linear surface portion, said image containing a reflected laser line which represents said linear beam reflected by said surface, wherein said acquisition is carried out along an optical axis (16);
- identifying, in said two-dimensional and matrix image, said reflected laser line;
- processing said reflected laser line via triangulation in order to obtain a three-dimensional image of said linear surface portion containing information relative to an altimetric profile of said linear surface portion,
**characterized in that** an acute angle (24) formed between said optical axis (16) and said propagation axis (23) is greater than or equal to 5° and less than or equal to 25°.

10. Method as claimed in claim 9, wherein said acute angle (24) is greater than or equal to 10° and less than or equal to 20°.

11. Method as claimed in claim 9 or 10, wherein said surface portion is situated within a depth of field of the camera, and wherein said surface portion lies in a lying plane substantially orthogonal to said propagation plane (21).

12. Method as claimed in any one of the claims from 9 to 11, also comprising selecting a sub-portion of the acquired two-dimensional image, along a direction substantially orthogonal to the reflected laser line in the two-dimensional image itself, wherein, after said operation of selection of the sub-portion of the acquired two-dimensional image, the number of pixels along said direction substantially orthogonal to the reflected laser line is less than or equal to 200 pixels.

13. Method as claimed in any one of the claims from 9 to 12, wherein said optical axis (16) and said propagation axis (23) lie in a plane substantially orthogonal to said propagation plane (21).

14. Method as claimed in any one of the claims from 9 to 13, wherein a region of said surface of the tyre is translated with respect to the apparatus (1) as claimed in any one of the claims from 1 to 7, in a manner such that a series of distinct linear portions of said surface region is situated in succession within a depth of field of said camera (12) at least at said propagation plane (21), and wherein said acquisition system (11) is activated during said translation for acquiring a respective series of three-dimensional images of said series of distinct linear portions of said surface region, and wherein a complete three-dimensional image of the surface region is obtained by combining the series of three-dimensional images obtained on the series of linear surface portions, and wherein said surface region is a circumferential surface region having width along an axis (140) of said tyre comprised between 5mm and 20mm, ends included.

15. Method as claimed in any one of the claims from 9 to 13, comprising rotating said tyre around a rotation axis (140), repeating in sequence said operations of irradiating with a laser beam, acquiring a two-dimensional image, identifying said reflected laser line, processing said reflected laser line and obtaining a three-dimensional image, with reference to a series of linear portions of a circumferential surface region of said tyre, and obtaining a complete three-dimensional image of the surface region by combining the series of three-dimensional images obtained in succession on the series of linear surface portions.

## Patentansprüche

1. Vorrichtung (1) zur Analyse von Reifen, umfassend:
- einen Tragrahmen (2) und
- ein Aufnahmesystem (11) zum Aufnehmen dreidimensionaler Bilder einer Oberfläche eines Reifens, wobei das Aufnahmesystem an den Tragrahmen montiert ist und Folgendes umfasst:
- eine Matrixkamera (12), die eine optische Achse (16) aufweist, und
- eine Laserquelle (20), die geeignet ist, einen Linienstrahl abzustrahlen, der eine Ausbreitungsebene (21) und eine Ausbreitungsachse (23) aufweist,
**dadurch gekennzeichnet, dass** ein zwischen der optischen Achse (16) und der Ausbreitungsachse (23) gebildeter spitzer Winkel (24) größer gleich 5° und kleiner gleich 25° ist.

2. Vorrichtung nach Anspruch 1, wobei der spitze Winkel (24) größer gleich 10° und kleiner gleich 20° ist.

3. Vorrichtung nach Anspruch 1 oder 2, wobei die Kamera einen Sensor, der eine Bildebene (29) definiert, und ein Objektiv (15), das die optische Achse, eine Brennebene (17) und eine Schärfentiefe aufweist, umfasst und wobei die Bildebene (29) mit einer Bezugsebene (30), die orthogonal zur optischen Achse (16) ist und durch das Objektiv verläuft, einen spitzen Winkel (31) bildet, dessen Scheitel auf jener Seite liegt, auf der die Laserquelle angeordnet ist, derart, dass die Brennebene (17) mit der Ausbreitungsachse (23) einen spitzen Winkel kleiner als 45° bildet, wobei der spitze Winkel (31) zwischen der Bildebene (29) und der Bezugsebene (30) kleiner gleich 20° und/oder größer gleich 5° ist.

4. Vorrichtung nach einem der vorhergehenden Ansprüche, wobei die Kamera (12) geeignet ist, ein zweidimensionales Bild eines Abschnitts der Oberfläche aufzunehmen, und eine Verarbeitungseinheit umfasst, die dafür eingerichtet ist, in dem zweidimensionalen Bild eine reflektierte Laserlinie zu identifizieren, die den von der Oberfläche reflektierten Linienstrahl darstellt, und die reflektierte Laserlinie durch Triangulation zu verarbeiten, um ein dreidimensionales Bild zu erhalten, das Informationen bezüglich eines Höhenprofils eines Teils des Oberflächenabschnitts enthält.

5. Vorrichtung nach Anspruch 4, wobei die Kamera (12) einen quaderförmigen Sensor umfasst, dessen größere Abmessung im Wesentlichen parallel zur Ausbreitungsebene (21) ist, wobei die größere Abmessung mindestens eine Größenordnung kleiner ist als die dazu orthogonale Abmessung.

6. Vorrichtung nach Anspruch 4, wobei die Verarbeitungseinheit dafür eingerichtet ist, einen Teilabschnitt des aufgenommenen zweidimensionalen Bildes entlang einer Richtung auszuwählen, die im Wesentlichen orthogonal zu der reflektierten Laserlinie in dem zweidimensionalen Bild selbst ist, und wobei nach dem Vorgang der Auswahl des Teilabschnitts des aufgenommenen Bildes die Anzahl der Pixel entlang der Richtung, die im Wesentlichen orthogonal zu der reflektierten Laserlinie ist, kleiner gleich 200 Pixel ist.

7. Vorrichtung nach einem der vorhergehenden Ansprüche, wobei die optische Achse (16) und die Ausbreitungsachse (23) in einer Ebene liegen, die im Wesentlichen orthogonal zu der Ausbreitungsebene (21) ist.

8. Station (100) zum Analysieren von Reifen in einer Reifenproduktionslinie, wobei die Station einen Träger (120), der geeignet ist, den auf eine Seitenwand gelegten Reifen (101) zu tragen und den Reifen um eine Drehachse (140) desselben zu drehen, und die Vorrichtung nach einem der vorhergehenden Ansprüche umfasst, wobei die Vorrichtung dazu bestimmt ist, an ein Bewegungselement (102) der Station montiert zu sein.

9. Verfahren zum Analysieren von Reifen, umfassend:
- Anordnen eines zu analysierenden Reifens (101);
- Bestrahlen eines linienförmigen Abschnitts einer Oberfläche des Reifens mit einem Linienlaserstrahl, der eine Ausbreitungsebene (21) und eine Ausbreitungsachse (23) aufweist und auf den linienförmigen Oberflächenabschnitt auftrifft;
- Aufnehmen eines zweidimensionalen Matrixbildes eines Oberflächenabschnitts, der den linienförmigen Oberflächenabschnitt enthält, wobei das Bild eine reflektierte Laserlinie enthält, die den von der Oberfläche reflektierten Linienstrahl darstellt, wobei die Aufnahme entlang einer optischen Achse erfolgt (16);
- Identifizieren der reflektierten Laserlinie in dem zweidimensionalen Matrixbild;
- Verarbeiten der reflektierten Laserlinie durch Triangulation, um ein dreidimensionales Bild des linienförmigen Oberflächenabschnitts zu erhalten, das Informationen bezüglich eines Höhenprofils des linienförmigen Oberflächenabschnitts enthält, **dadurch gekennzeichnet, dass** ein zwischen der optischen Achse (16) und der Ausbreitungsachse (23) gebildeter spitzer Winkel (24) größer gleich 5° und kleiner gleich 25° ist.

10. Verfahren nach Anspruch 9, wobei der spitze Winkel (24) größer gleich 10° und kleiner gleich 20° ist.

11. Verfahren nach Anspruch 9 oder 10, wobei sich der Oberflächenabschnitt innerhalb der Schärfentiefe der Kamera befindet und wobei der Oberflächenabschnitt in einer Liegeebene liegt, die im Wesentlichen orthogonal zu der Ausbreitungsebene (21) ist.

12. Verfahren nach einem der Ansprüche 9 bis 11, außerdem umfassend: Auswählen eines Teilabschnitts des aufgenommenen zweidimensionalen Bildes entlang einer Richtung, die im Wesentlichen orthogonal zu der reflektierten Laserlinie in dem zweidimensionalen Bild selbst ist, wobei nach dem Vorgang des Auswählens des Teilabschnitts des aufgenommenen zweidimensionalen Bildes die Anzahl der Pixel entlang der Richtung, die im Wesentlichen orthogonal zu der reflektierten Laserlinie ist, kleiner oder gleich 200 Pixel ist.

13. Verfahren nach einem der Ansprüche 9 bis 12, wobei die optische Achse (16) und die Ausbreitungsachse (23) in einer Ebene liegen, die im Wesentlichen orthogonal zu der Ausbreitungsebene (21) ist.

14. Verfahren nach einem der Ansprüche 9 bis 13, wobei ein Bereich der Oberfläche des Reifens in Bezug auf die Vorrichtung (1), wie in einem der Ansprüche 1 bis 7 beansprucht, derart parallelverschoben wird, dass eine Serie verschiedener linienförmiger Abschnitte des Oberflächenbereiches nacheinander innerhalb einer Schärfentiefe der Kamera (12), zumindest in der Ausbreitungsebene (21), angeordnet wird, und wobei das Aufnahmesystem (11) während der Parallelverschiebung aktiviert wird, um eine entsprechende Folge dreidimensionaler Bilder von der Serie verschiedener linienförmiger Abschnitte des Oberflächenbereiches aufzunehmen, und wobei durch Kombinieren der Folge der von der Serie linienförmiger Oberflächenabschnitte erhaltenen dreidimensionalen Bilder ein vollständiges dreidimensionales Bild des Oberflächenbereiches erhalten wird und wobei der Oberflächenbereich ein Umfangsflächenbereich ist, der entlang einer Achse (140) des Reifens eine Breite im Bereich zwischen 5 mm und 20 mm, Enden eingeschlossen, aufweist.

15. Verfahren nach einem der Ansprüche 9 bis 13, umfassend: Drehen des Reifens um eine Drehachse (140), wobei die Bestrahlungsvorgänge mit einem Laserstrahl der Reihe nach wiederholt werden, Aufnehmen eines zweidimensionalen Bildes, Identifizieren der reflektierten Laserlinie, Verarbeiten der reflektierten Laserlinie und Erhalten eines dreidimensionalen Bildes, eine Serie linienförmiger Abschnitte eines Umfangsflächenbereiches des Reifens betreffend, und Erhalten eines vollständigen dreidimensionalen Bildes des Oberflächenbereiches durch Kombinieren der Folge der nacheinander von der Serie linienförmiger Oberflächenabschnitte erhaltenen dreidimensionalen Bilder.

## Revendications

1. Appareil (1) pour l'analyse de pneus comprenant :
- un cadre de support (2) et
- un système d'acquisition (11) pour acquérir des images tridimensionnelles d'une surface d'un pneu, ledit système d'acquisition étant monté sur ledit cadre de support et comprenant :
- une caméra matricielle (12), ayant un axe optique (16), et
- une source laser (20) adaptée pour émettre un faisceau linéaire ayant un plan de propagation (21) et un axe de propagation (23),
**caractérisé en ce qu'**un angle aigu (24) formé entre ledit axe optique (16) et ledit axe de propagation (23) est supérieur ou égal à 5° et inférieur ou égal à 25°.

2. Appareil tel que revendiqué dans la revendication 1, dans lequel ledit angle aigu (24) est supérieur ou égal à 10° et inférieur ou égal à 20°.

3. Appareil tel que revendiqué dans la revendication 1 ou 2, dans lequel la caméra comprend un capteur, définissant un plan d'image (29), un objectif (15) ayant ledit axe optique, un plan focal (17) et une profondeur de champ, et dans lequel ledit plan d'image (29) forme, avec un plan de référence (30) orthogonal à l'axe optique (16) et passant à travers ledit objectif, un angle aigu (31) ayant un sommet sur un côté où ladite source laser est agencée, de manière à ce que ledit plan focal (17) forme avec ledit axe de propagation (23) un angle aigu inférieur à 45°, dans lequel ledit angle aigu (31) entre le plan d'image (29) et le plan de référence (30) est inférieur ou égal à 20°, et/ou supérieur ou égal à 5°.

4. Appareil tel que revendiqué dans l'une quelconque des revendications précédentes, dans lequel la caméra (12) est adaptée pour acquérir une image bidimensionnelle d'une partie de ladite surface et comprend une unité de traitement configurée pour identifier, dans ladite image bidimensionnelle, une ligne laser réfléchie qui représente ledit faisceau linéaire réfléchi par ladite surface, et pour traiter, par triangulation, ladite ligne laser réfléchie afin d'obtenir une image tridimensionnelle contenant des informations concernant un profil altimétrique d'une portion de ladite partie de surface.

5. Appareil tel que revendiqué dans la revendication 4, dans lequel la caméra (12) comprend un capteur rectangulaire ayant une plus grande taille essentiellement parallèle audit plan de propagation (21), où ladite plus grande taille est inférieure à la taille orthogonale à celle-ci d'au moins un ordre de grandeur.

6. Appareil tel que revendiqué dans la revendication 4, dans lequel l'unité de traitement est configurée pour sélectionner une sous-partie de l'image bidimensionnelle acquise, le long d'une direction essentiellement orthogonale à la ligne laser réfléchie dans l'image bidimensionnelle elle-même, et dans lequel, après ladite opération de sélection de la sous-partie de l'image acquise, le nombre de pixels le long de ladite direction essentiellement orthogonale à la ligne laser réfléchie est inférieur ou égal à 200 pixels.

7. Appareil tel que revendiqué dans l'une quelconque des revendications précédentes, dans lequel ledit axe optique (16) et ledit axe de propagation (23) se trouvent dans un plan essentiellement orthogonal audit plan de propagation (21).

8. Poste (100) pour analyser des pneus dans une chaîne de production de pneus, le poste comprenant un support (120) adapté pour supporter le pneu (101) placé sur un flanc et pour faire tourner le pneu autour d'un axe de rotation (140) de celui-ci, et l'appareil tel que revendiqué dans l'une quelconque des revendications précédentes, l'appareil étant destiné à être monté sur un élément de déplacement (102) de celui-ci.

9. Procédé d'analyse de pneus comprenant le fait :
- d'agencer un pneu (101) à analyser ;
- d'irradier une partie linéaire d'une surface dudit pneu avec un faisceau laser linéaire ayant un plan de propagation (21) et un axe de propagation (23) incident sur ladite partie de surface linéaire ;
- d'acquérir une image bidimensionnelle et matricielle d'une partie de surface contenant ladite partie de surface linéaire, ladite image contenant une ligne laser réfléchie qui représente ledit faisceau linéaire réfléchi par ladite surface, où ladite acquisition est réalisée le long d'un axe optique (16) ;
- d'identifier, dans ladite image bidimensionnelle et matricielle, ladite ligne laser réfléchie ;
- de traiter ladite ligne laser réfléchie par triangulation afin d'obtenir une image tridimensionnelle de ladite partie de surface linéaire contenant des informations concernant un profil altimétrique de ladite partie de surface linéaire,
**caractérisé en ce qu'**un angle aigu (24) formé entre ledit axe optique (16) et ledit axe de propagation (23) est supérieur ou égal à 5° et inférieur ou égal à 25°.

10. Procédé tel que revendiqué dans la revendication 9, dans lequel ledit angle aigu (24) est supérieur ou égal à 10° et inférieur ou égal à 20°.

11. Procédé tel que revendiqué dans la revendication 9 ou 10, dans lequel ladite partie de surface est située dans une profondeur de champ de la caméra, et dans lequel ladite partie de surface se trouve dans un plan horizontal essentiellement orthogonal audit plan de propagation (21).

12. Procédé tel que revendiqué dans l'une quelconque des revendications 9 à 11, comprenant également le fait de sélectionner une sous-partie de l'image bidimensionnelle acquise, le long d'une direction essentiellement orthogonale à la ligne laser réfléchie dans l'image bidimensionnelle elle-même, où, après ladite opération de sélection de la sous-partie de l'image bidimensionnelle acquise, le nombre de pixels le long de ladite direction essentiellement orthogonale à la ligne laser réfléchie est inférieur ou égal à 200 pixels.

13. Procédé tel que revendiqué dans l'une quelconque des revendications 9 à 12, dans lequel ledit axe optique (16) et ledit axe de propagation (23) se trouvent dans un plan essentiellement orthogonal audit plan de propagation (21) .

14. Procédé tel que revendiqué dans l'une quelconque des revendications 9 à 13, dans lequel une région de ladite surface du pneu se déplace en translation par rapport à l'appareil (1) tel que revendiqué dans l'une quelconque des revendications 1 à 7, de manière à ce qu'une série de parties linéaires distinctes de ladite région de surface soit située successivement dans une profondeur de champ de ladite caméra (12) au moins au niveau dudit plan de propagation (21), et dans lequel ledit système d'acquisition (11) est activé pendant ladite translation pour acquérir une série respective d'images tridimensionnelles de ladite série de parties linéaires distinctes de ladite région de surface, et dans lequel une image tridimensionnelle complète de la région de surface est obtenue en combinant la série d'images tridimensionnelles obtenues sur la série de parties de surface linéaires, et dans lequel ladite région de surface est une région de surface circonférentielle ayant une largeur le long d'un axe (140) dudit pneu comprise entre 5 mm et 20 mm, extrémités incluses.

15. Procédé tel que revendiqué dans l'une quelconque des revendications 9 à 13, comprenant le fait de faire tourner ledit pneu autour d'un axe de rotation (140), de répéter séquentiellement lesdites opérations d'irradiation avec un faisceau laser, d'acquisition d'une image bidimensionnelle, d'identification de ladite ligne laser réfléchie, de traitement de ladite ligne laser réfléchie et d'obtention d'une image tridimensionnelle, en référence à une série de parties linéaires d'une région de surface circonférentielle dudit pneu, et d'obtenir une image tridimensionnelle complète de la région de surface en combinant la série d'images tridimensionnelles obtenues successivement sur la série de parties de surface linéaires.
